# NOUVEAU FASCICULE DE BREVET EUROPEEN

(11) **EP 1 856 425 B2**
(45) Date de publication et mention de la décision concernant l'opposition: **29.11.2017**
(45) Mention de la délivrance du brevet: 28.04.2010
(21) Numéro de dépôt: 06709516.6
(22) Date de dépôt: 15.02.2006
(51) Int. Cl.: F16H 7/00

(54) **MOTEUR A COMBUSTION INTERNE COMPORTANT UN AGENCEMENT DE PIGNONS SUR UNE EXTREMITE DU VILEBREQUIN**
VERBRENNUNGSMOTOR MIT EINER RITZELANORDNUNG AN EINEM ENDE DER KURBELWELLE
INTERNAL COMBUSTION ENGINE COMPRISING A PINION ARRANGEMENT ON ONE END OF THE CRANKSHAFT

(30) Priorité: 01.03.2005 FR 0550534
(43) Date de publication de la demande: 21.11.2007
(73) Titulaire: Renault s.a.s., 92100 Boulogne Billancourt (FR)
(72) Inventeur: EBERHARDT, Guy, F-93390 Clichy sous Bois (FR); REVERSEAU, Denis, F-75017 Paris (FR); SOUA, Ali, F-92100 Boulogne Billancourt (FR)
(74) Mandataire: Gevers & Orès
(86) Numéro de dépôt international: PCT/FR2006/050137
(87) Numéro de publication internationale: WO 2006/092519

(56) Documents cités:
- WO-A1-92/13177
- US-A- 4 553 509
- US-A- 4 589 382
- US-A- 5 033 421
- US-A- 5 063 895
- US-A- 6 030 306
- PATENT ABSTRACTS OF JAPAN vol. 007, no. 227 (M-248), 7 octobre 1983 (1983-10-07) & JP 58 119929 A (HONDA GIKEN KOGYO KK), 16 juillet 1983 (1983-07-16)

## Description

L'invention propose un moteur à combustion comportant deux rangées de cylindres inclinées l'une par rapport à l'autre, qui comporte un agencement de pignons sur une extrémité axiale du vilebrequin. On connaît des documents US 5 063 895, A et WO 92/13177, un moteur tel que décrit ci-dessus.

L'invention propose plus particulièrement un moteur à combustion interne qui est réalisé selon la revendication 1.

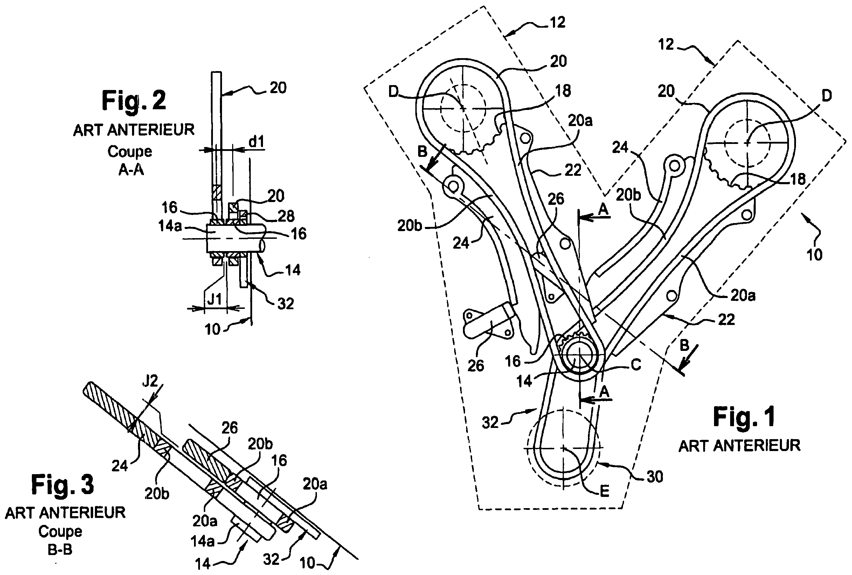

On a représenté à la figure 1 un moteur à combustion interne 10 de type conventionnel dit en "V", qui comporte deux rangées de cylindres 12 inclinées l'une par rapport à l'autre autour de l'axe "C" de rotation du vilebrequin 14.

Le moteur 10 comporte un système de distribution associé à chaque rangée de cylindres 12, qui comporte un ou plusieurs arbres à cames, pour la commande de la levée des soupapes d'admission et d'échappement de chaque cylindre.

Chaque arbre à cames est entraîné en rotation autour de son axe principal "D" parallèle à l'axe "C" du vilebrequin 14, par l'intermédiaire d'un pignon de distribution 16 qui est monté sur une extrémité 14a du vilebrequin 14 du moteur 10, un pignon mené 18 qui est monté sur une extrémité de l'arbre à cames, et une chaîne de distribution 20 qui relie le pignon de distribution 16 au pignon mené 18.

Chaque système de distribution comporte aussi un patin fixe 22 de guidage du brin tendu 20a de la chaîne de distribution 20, et un patin mobile 24 de guidage et de tension du brin mou 20b de la chaîne de distribution 20, dont le déplacement est obtenu par l'intermédiaire d'un tendeur hydraulique 26.

Le moteur comporte aussi un accessoire 30, par exemple une pompe à huile, qui comporte un élément mobile en rotation par rapport au moteur autour d'un axe "E" parallèle à l'axe "C" du vilebrequin 14.

L'axe "E" de la pompe à huile 30 est décalé radialement par rapport à l'axe principal "C" du vilebrequin 14, et l'élément mobile de la pompe à huile 30 est entraîné en rotation par l'intermédiaire du vilebrequin 14 dont l'extrémité 14a porte aussi un pignon d'entraînement 28 de la pompe à huile 30, et par l'intermédiaire d'une courroie 32.

Selon un mode de réalisation conventionnel du moteur, et comme on peut le voir aux figures 2 et 3, les pignons de distribution 16 et le pignon d'entraînement 28 sont montés sur l'extrémité 14a du vilebrequin 14 de manière que les deux pignons de distribution 16 sont adjacents l'un de l'autre, et le pignon 28 d'entraînement de la pompe à huile est monté sur l'extrémité 14a du vilebrequin 14 d'un coté de l'ensemble formé par les deux pignons de distribution 16.

Cependant, comme on peut le voir à la figure 2, les pignons de distribution 16 sont montés sur l'extrémité 14a du vilebrequin 14 avec un jeu "J1" de montage entre eux.

Ce jeu de montage "J1" permet de maintenir un jeu de fonctionnement "J2" entre le brin tendu 20a d'une chaîne de distribution 20 et le tendeur hydraulique 26 associé à l'autre chaîne de distribution 20, comme on peut le voir à la figure 3, pour limiter les risques de contact entre le brin tendu 20a et le tendeur hydraulique 26.

L'encombrement axial de l'ensemble formé par les trois pignons de distribution 16 et par le pignon d'entraînement 28 est ainsi défini par la largeur de chaque pignon 16, 28, mais aussi par la valeur du jeu de montage "J1" des deux pignons d'entraînement 16.

L'invention a pour but de proposer un moteur en "V" pour lequel l'encombrement axial de l'agencement des pignons de distribution 16 et du pignon d'entraînement 28 sur l'extrémité 14a du vilebrequin 14 est réduit.

Dans ce but, l'invention propose un vilebrequin du type décrit précédemment, caractérisé en ce que le pignon d'entraînement de l'accessoire est situé axialement entre les deux pignons de distribution dont chacun est associé à l'une des deux rangées de cylindres.

Selon d'autres caractéristiques de l'invention :
les pignons de distribution et le pignon d'entraînement sont réalisés en une seule pièce qui est montée sur l'extrémité du vilebrequin.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en bout d'un moteur à combustion en "V", montrant les moyens d'entraînement des arbres à cames et de la pompe à huile ;
- la figure 2 est une vue en coupe suivant la ligne A-A du moteur représenté à la figure 1, montrant le positionnement axial des pignons d'entraînement sur l'extrémité du vilebrequin ;
- la figure 3 est une vue en coupe suivant la ligne B-B du moteur représenté à la figure 1, montrant le positionnement longitudinal relatif entre la courroie associée à un pignon de distribution et le tendeur pneumatique associé à l'autre pignon de distribution ;
- la figure 4 est une vue similaire à celle de la figure 1, dans laquelle les pignons d'entraînement sont agencés conformément à l'invention ;
- la figure 5 est une vue en coupe similaire à celle de la figure 2, montrant le positionnement axial des pignons d'entraînement qui ne représente pas l'invention ;
- la figure 6 est une vue en coupe similaire à celle de la figure 3, montrant le positionnement entre la courroie associée à un pignon de distribution et le tendeur hydraulique associé à l'autre pignon de distribution qui résulte du positionnement des pignons d'entraînement selon l'invention.

Dans la description qui va suivre, des éléments identiques, similaires ou analogues seront désignés par les mêmes chiffres de référence.

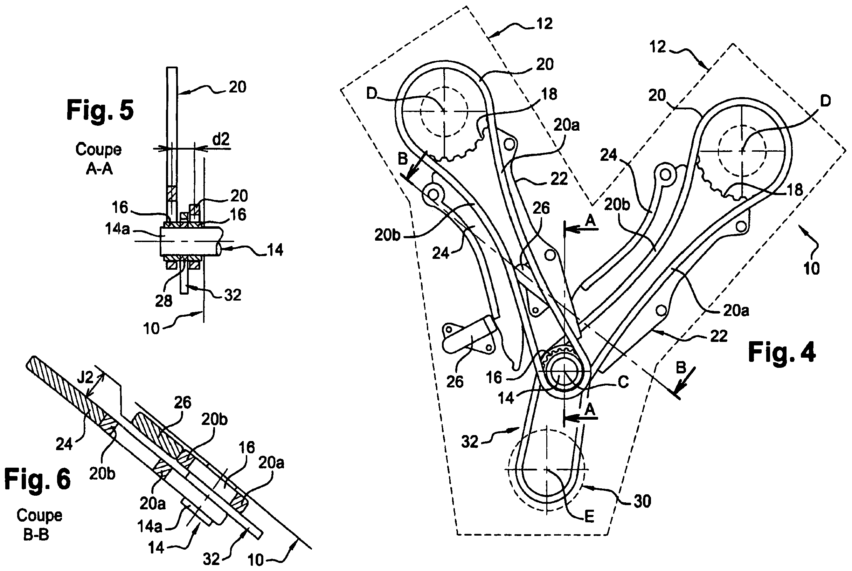

On a représenté à la figure 4 un moteur 10 à combustion interne du type en "V", qui est similaire à celui décrit précédemment, c'est-à-dire qu'il comporte deux rangées de cylindres 12 inclinées l'une par rapport à l'autre autour de l'axe principal du vilebrequin 14, un système de distribution associé à chaque rangée de cylindres 12, et un accessoire 30, comme par exemple une pompe à huile, dont l'axe principal "E" est décalé radialement par rapport à l'axe principal "C" du vilebrequin 14.

Chaque système de distribution comporte au moins un arbre à cames qui est entraîné en rotation autour de son axe principal "D" par l'intermédiaire d'un pignon de distribution 16 monté sur une extrémité 14a du vilebrequin 14, un pignon mené 18 monté sur un extrémité de l'arbre à cames, et une chaîne de distribution 20 qui relie le pignon mené 18 au pignon de distribution 16.

L'extrémité 14a du vilebrequin porte aussi un pignon d'entraînement 28 de la pompe à huile 30.

Conformément à l'invention, le pignon d'entraînement 28 est situé axialement sur l'extrémité 14a du vilebrequin 14 entre les deux pignons de distribution 16.

La largeur axiale du pignon d'entraînement 28 est supérieure au jeu "J1" de montage des pignons de distribution 16 selon l'art antérieur.

Ainsi, comme on peut le voir plus en détails à la figure 5, la distance "d2" entre les deux systèmes de distribution agencés, est supérieure à la distance "d1" entre les deux systèmes de distribution agencés conformément à l'art antérieur (figure 2).

De plus, comme on peut le voir à la figure 6, la distance entre le tendeur hydraulique 26 et le brin tendu 20a de la chaîne 20 est alors supérieure au jeu "J2" de montage conforme à l'art antérieur.

Selon l'invention, les pignons de distribution 16 et le pignon d'entraînement 28 sont montés sans jeu axial sur l'extrémité 14a du vilebrequin 14.

Ainsi, l'encombrement axial de l'agencement des pignons 16, 28 est égal au cumul des largeurs des pignons de distribution 16 et du pignon d'entraînement 28, il est globalement inférieur de la valeur du jeu de montage "J1" par rapport à l'encombrement de l'agencement des pignons 16, 28 selon l'art antérieur.

Selon l'invention, le pignon d'entraînement 28 est réalisé en une seule pièce avec l'un des deux pignons de distribution 16, et selon encore une autre variante de réalisation, le pignon d'entraînement 28 est réalisé en une seule pièce avec les deux pignons de distribution 16.

Cela permet notamment de simplifier l'assemblage du moteur 10 en ne montant qu'un seul élément à l'extrémité 14a du vilebrequin 14.

L'invention a été décrite par rapport à un moteur 10 pour lequel les arbres à cames et la pompe à huile 30 sont entraînés en rotation par des ensembles de chaînes 20, 32 et de pignons 16, 18, 28. Cependant, il sera compris que l'invention n'est pas limitée à ces moyens d'entraînement, et que les arbres à cames et/ou la pompe à huile 30 peuvent être entraînés par des ensembles de poulies et de courroies de type connus.

## Revendications

1. Moteur (10) à combustion interne qui comporte deux rangées de cylindres (12) inclinées l'une par rapport à l'autre autour de l'axe principal "C" longitudinal de rotation du vilebrequin (14) du moteur (10), et qui comporte un agencement d'un ensemble de pignons (16, 28) à une extrémité axiale (14a) du vilebrequin (14), ledit agencement comportant:
- un pignon de distribution (16) associé à chaque rangée de cylindres (12), pour l'entraînement en rotation d'au moins un arbre à cames, et
- un pignon d'entraînement (28) d'un accessoire (30) du moteur (10), ledit accessoire (30) étant décalé radialement par rapport à l'axe principal longitudinal du vilebrequin (14), le pignon d'entraînement (28) de l'accessoire (30) étant situé axialement entre les deux pignons de distribution (16) dont chacun est associé à l'une des deux rangées de cylindres (12),
les pignons de distribution (16) et le pignon d'entraînement (28) sont montés globalement sans jeu axial sur l'extrémité axiale (14a) du vilebrequin (14),
**caractérisé en ce que** le pignon d'entraînement (28) est réalisé en une seule pièce avec au moins l'un des deux pignons de distribution (16).

2. Moteur (10) selon la revendication précédente, **caractérisé en ce que** les pignons de distribution (16) et le pignon d'entraînement (28) sont réalisés en une seule pièce qui est montée sur l'extrémité (14a) du vilebrequin (14).

## Patentansprüche

1. Verbrennungsmotor (10), der zwei Zylinderreihen (12), die um die Hauptlängsdrehachse "C" der Kurbelwelle (14) des Motors (10) bezüglich einander geneigt sind, sowie eine Anordnung einer Gruppe von Ritzeln (16, 28) an einem axialen Ende (14a) der Kurbelwelle (14) umfasst, wobei die Anordnung Folgendes umfasst:
- ein jeder Zylinderreihe (12) zugeordnetes Steuerritzel (16) zum Drehantrieb von mindestens einer Nockenwelle und
- ein Antriebsritzel (28) eines Zubehörteils (30) des Motors (10), wobei das Zubehörteil (30) bezüglich der Hauptlängsachse der Kurbelwelle (14) radial versetzt ist, wobei das Antriebsritzel (28) des Zubehörteils (30) axial zwischen den beiden Steuerritzeln (16) angeordnet ist, von denen jedes einer der beiden Zylinderreihen (12) zugeordnet ist, die Steuerritzel (16) und das Antriebsritzel (28) allgemein ohne axiales Spiel am axialen Ende (14a) der Kurbelwelle (14) montiert sind, **dadurch gekennzeichnet, dass** das Antriebsritzel (28) einstückig mit mindestens einem der beiden Steuerritzel (16) ausgeführt ist.

2. Motor (10) nach dem vorhergehenden Anspruch, **dadurch gekennzeichnet, dass** die Steuerritzel (16) und das Antriebsritzel (28) in einem Stück ausgeführt sind, das am Ende (14a) der Kurbelwelle (14) montiert ist.

## Claims

1. Internal combustion engine (10) which comprises two banks of cylinders (12) inclined with respect to one another about the main longitudinal axis "C" of rotation of the crankshaft (14) of the engine (10), and which comprises an arrangement of a set of pinions (16, 28) at an axial end (14a) of the crankshaft (14), the said arrangement comprising:
- a timing pinion (16) associated with each bank of cylinders (12) for rotating at least one camshaft, and
- a drive pinion (28) for driving an accessory (30) of the engine (10), the said accessory (30) being offset radially with respect to the main longitudinal axis of the crankshaft (14),
the pinion (28) for driving the accessory (30) being situated axially between the two timing pinions (16), each of which is associated with one of the two banks of cylinders (12),
the timing pinions (16) and the drive pinion (28) are mounted completely without axial clearance on the axial end (14a) of the crankshaft (14),
**characterized in that** the drive pinion (28) is produced in a single piece with at least one of the two timing pinions (16).

2. Engine (10) according to the preceding claim, **characterized in that** the timing pinions (16) and the drive pinion (28) are produced in a single piece which is mounted on the end (14a) of the crankshaft (14).
